# EUROPÄISCHE PATENTSCHRIFT

(11) **EP 0 683 349 B1**
(45) Veröffentlichungstag und Bekanntmachung des Hinweises auf die Patenterteilung: **29.10.1997**
(21) Anmeldenummer: 95107163.8
(22) Anmeldetag: 11.05.1995
(51) Int. Cl.: F16L 59/02

(54) **Rohrschalen aus Schaumkunststoff**
Pipe sleeve of foamed plastic material
Manchon pour un tuyau en matière plastique cellulaire

(30) Priorität: 20.05.1994 DE 9408332 U
(43) Veröffentlichungstag der Anmeldung: 22.11.1995
(73) Patentinhaber: BASF AKTIENGESELLSCHAFT, 67056 Ludwigshafen (DE)
(72) Erfinder: Krückau, Fritz Ernst, D-67271 Battenberg (DE); Rau, Walter, D-68165 Mannheim (DE)

(56) Entgegenhaltungen:
- DE-A- 3 409 424
- GB-A- 1 397 477
- DATABASE WPI Week 9315 Derwent Publications Ltd., London, GB; AN 93120855 XP002013347 & JP-A-05 057 826 (MYOJO KOGYO KK), 3. September 1993

## Beschreibung

Die Erfindung betrifft Rohrschalen mit verminderter Schrumpfneigung aus offenzelligem Schaumkunststoff.

Zur thermischen Isolierung von Rohren, welche mit heißen Flüssigkeiten oder Gasen beschickt werden, verwendet man Rohrschalen aus temperaturbeständigem Schaumkunststoff, beispielsweise aus offenzelligen Melamin/Formaldehyd-Schaumstoffen oder halbharten Polyurethan-Schaumstoffen, die häufig mit Folienkaschierungen oder Beschichtungen außenseitig belegt sind.

Rohrschalen aus solchen offenzelligen Schaumstoffen schrumpfen, wenn die damit isolierten Rohre erhitzt werden. Grund dafür ist, daß sich der Feuchtegehalt bei Betrieb an einem warmen Rohr im Vergleich zum Feuchtegehalt bei Raumklima vor der Montage deutlich verringert. Diese Reduzierung des Feuchtegehaltes geht mit einer Volumenverkleinerung des Schaumstoffs einher. Dies führt dazu, daß sich die Rohrschale verkürzt und somit Spalten zwischen den einzelnen Rohrschalen entstehen können. Weiterhin kann dieser Schrumpf bei an der Oberfläche mit z.B. Aluminiumfolie beschichteten Rohrschalen zu einer Faltenbildung eben dieser Folie führen.

Der Erfindung lag also die Aufgabe zugrunde, Rohrschalen aus Schaumkunststoff bereit bereitzustellen, die eine verminderte Schrumpfneigung zeigen und nicht zur Faltenbildung der Kaschierung führen.

Diese Aufgabe wird erfindungsgemäß gelöst bei Rohrschalen mit einer Vielzahl von ringförmigen Einschnitten (1), die senkrecht zur Rohrachse verlaufen und von der äußeren Oberfläche der Rohrschale ausgehend 25 bis 95 % der Schalendicke (2) einschneiden.

In der JP-A-5057826 sind Rohrschalen aus thermisch isolierendem Polyurethanschaum beschrieben, die mit einer feuchtigkeits- und brandhemmenden Oberflächenschicht versehen sind.

Die DE-A-3409424 betrifft Dämmplatten für die Wärme- oder Kälteisolierung aus Kunststoff-Hartschaum, der im allgemeinen geschlossenzellig ist. Damit die durch Temperaturschwankungen hervorgerufenen Dehnungen und Schrumpfungen sich nicht auf die gesamte Länge der Platten auswirken, sind die Platten mit Nadel-Einstichen oder Messerschlitzen versehen, die jedoch nicht durchgängig verlaufen.

Als Ausgangsmaterialien für den offenzelligen Schaumstoff kommen grundsätzlich alle Kunststoffe in Frage, die sich zu offenzelligen Schaumstoffen verschäumen lassen, insbesondere die Kondensationsharze auf Basis von Melamin-, Harnstoff- und Phenol-Formaldehyd, daneben aber auch Polyurethan-Weichschäume und halbharte PUR-Schäume. Besonders bevorzugt sind elastische Schaumstoffe auf Basis von Melaminharzen, wie sie z.B. in EP-B 17 672 beschrieben sind. Derartige Schaumstoffe haben den Vorteil, daß sie auch ohne Zusatz von Flammschutzmitteln flammfest sind.

Das spezifische Gewicht des offenzelligen Schaumstoffs liegt im allgemeinen zwischen 5 und 100 g/l, insbesondere zwischen 8 und 30 g/l.

Die erfindungsgemäßen Rohrschalen sind gekennzeichnet durch eine Vielzahl von ringförmigen Einschnitten, die senkrecht zur Rohrachse verlaufen und von der äußeren Oberfläche der Rohrschale ausgehend 25 bis 95 %, vorzugsweise 50 bis 90 % der Schalendicke einschneiden. Je nach Anwendungsfall können die Anzahl der Schlitze, die auf die Länge der Rohrschale hin verteilt eingebracht werden, und die Schlitztiefe variieren. Mit steigender Schlitzzahl läßt sich der Längschrumpf minimieren, wobei es eine obere Grenze gibt, ab der keine weitere Verringerung des Schrumpfes mehr zu erkennen ist. Bevorzugt betragen die Abstände der Einschnitte längs der Rohrachse 20 bis 300 mm, insbesondere 30 bis 200 mm.

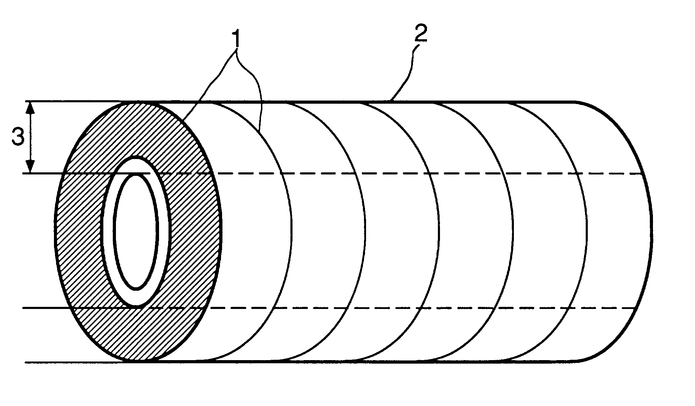

Die Abbildung zeigt die Skizze einer Rohrschale. Mit (1) sind die Einschnitte bezeichnet. (2) bedeutet die Oberfläche der Rohrschale, (3) ist die Schalendicke. Die Einschnitt-Tiefe ist schraffiert. Die Kaschierung ist nicht eingezeichnet.

Die Schlitze können nach üblichen Methoden in den Schaumstoff eingebracht werden, z.B. durch Schneiden oder Sägen, vorzugsweise durch rotierende Messer. Nach dem Einschneiden wird in einer bevorzugten Ausführungsform die Rohrschale außen kaschiert, um die Wärmeabstrahlung zu vermindern und die Dämmung vor Einflüssen von außen zu schützen, wobei Kunststoffolien, Dachpappe oder bevorzugt Aluminiumpapier verwendet wird, welches mittels eines üblichen Klebers, z.B. mit Weißleim auf die geschlitzte Rohrschale aufgeklebt wird.

Durch erfindungsgemäße Einschnitte wird verhindert, daß es nach der Montage der Rohrschalen zu einer Spaltbildung zwischen den einzelnen Rohrschalenstücken kommt und daß Faltenbildung bei der Oberflächenkaschierung auftritt.

### Beispiel

Eine Rohrschale aus BASOTECT® (einem Melamin/Formaldehyd-Schaumstoff der Dichte 10 g·l⁻¹) mit einem Innendurchmesser von 75 mm und einer Wandstärke von 50 mm wurde mittels rotierender Messer in Umfachsrichtung mit ringförmigen Einschnitten einer Tiefe von 40 mm versehen. Die Rohrschale ist mit einer 250 µm dicken Aluminiumfolie mittels Weißleim kaschiert.

Um den Einfluß der Schlitzanzahl zu untersuchen, wurden auf die Länge von 500 mm jeweils 2, 5 oder 10 Schlitze eingebracht. Die Rohrschalen wurden im Klima 30°C/80 % Feuchtigkeit bis zum Gleichgewicht gelagert und durchliefen dann das folgende Temperaturprogramm:

| Haltestufendauer [h] | 1 | 1 | 1 | 1 | 1 | 1 | 16 |
|---|---|---|---|---|---|---|---|
| Temperatur [°C] | 66 | 94 | 120 | 148 | 176 | 194 | 194 |

Nach Beendigung der letzten Temperaturstufe wurde der Schrumpf ermittelt.

Die Tabelle zeigt den Längsschrumpf der Rohrschalen in Abhängigkeit von der Schlitzanzahl bzw. dem Schlitzabstand.

| Schlitzanzahl | 0 | 2 | 5 | 10 |
|---|---|---|---|---|
| Schlitzabstand in mm | 500 | 167 | 83 | 45 |
| Längsschrumpf in % | 1,4 | 0,8 | 0,5 | 0,45 |

## Patentansprüche

1. Rohrschalen aus offenzelligem Schaumkunststoff mit außenseitiger Beschichtung oder Kaschierung, gekennzeichnet durch eine Vielzahl von ringförmigen Einschnitten (1), die senkrecht zur Rohrachse verlaufen und von der äußeren Oberfläche (2) der Rohrschale ausgehend 25 bis 95 % der Schalendicke (3) einschneiden, welche den Rohrschalen eine verminderte Schrumpfneigung verleihen.

2. Rohrschalen nach Anspruch 1, dadurch gekennzeichnet, daß die Abstände der Einschnitte längs der Rohrachse 20 bis 300 mm betragen.

## Claims

1. Pipe lagging made from open-cell foam plastic, with external coating or lamination, having a multiplicity of annular incisions (1) which run perpendicular to the pipe axis, extend through from 25 to 95 % of the lagging thickness (3), starting from the outer surface (2) of the lagging, and reduce the tendency of the pipe lagging to shrink.

2. Pipe lagging as claimed in claim 1, wherein the distance between the incisions along the pipe axis is from 20 to 300 mm.

## Revendications

1. Coquilles tubulaires en mousse synthétique à cellules ouvertes, comportant à l'extérieur un revêtement ou un placage, caractérisées par un grand nombre de découpes (1) de forme annulaire qui s'étendent perpendiculairement à l'axe du tube et qui, partant de la surface externe (2) de la coquille tubulaire, s'enfoncent sur 25 à 95% de l'épaisseur (3) de la coquille, lesquelles découpes confèrent aux coquilles tubulaires une tendance diminuée au retrait.

2. Coquilles selon la revendication 1, caractérisées en ce que, le long de l'axe du tube, les écarts entre les découpes se situent dans la plage de 20 à 300 mm.
